# EUROPEAN PATENT SPECIFICATION

(11) **EP 1 520 125 B1**
(45) Date of publication and mention of the grant of the patent: **11.04.2007**
(21) Application number: 03762784.1
(22) Date of filing: 03.07.2003
(51) Int. Cl.: F16H 59/04

(54) **A SHIFT LEVER MECHANISM**
SCHALTHEBELMECHANISMUS
MECHANISME DE LEVIER DE VITESSE

(30) Priority: 04.07.2002 GB 0215471
(43) Date of publication of application: 06.04.2005
(73) Proprietor: Eaton Corporation, Cleveland, Ohio 44114-2584 (US)
(72) Inventor: JACKSON, Graeme A., Worsley, Manchester M28 5GJ (GB)
(74) Representative: Goddard, David John
(86) International application number: PCT/GB2003/002873
(87) International publication number: WO 2004/005766

(56) References cited:
- US-A- 2 197 938
- US-A- 3 064 493
- US-A- 3 835 270
- US-A- 4 581 951

## Description

The present invention relates to gear shift lever mechanisms, particularly to supporting a shift lever and biasing the shift lever into a preferred position.

Normally, the shifting of ratios in a transmission system is effected by a shift finger acting on a set of transmission forks in the transmission. The shift finger is acted on by a shift lever extending outside the transmission and supported in a supporting mechanism.

Often, on a rear wheel drive vehicle, the shift lever is directly operable on the transmission system and is mounted in a housing extending from the top thereof. On a front wheel drive vehicle, and in some cases on a rear wheel drive vehicle, depending on the location of the transmission with respect to the drivers seat, the shift lever is normally remotely operable on the transmission system by means of a remote control shift assembly. The remote control shift assembly normally comprises a series of levers, or other means such as, for example, cables or hydraulic mechanisms, to which the shift lever is connected.

Known shift lever supporting mechanisms comprise an enlarged spherical portion disposed on the shift lever. The spherical portion is arranged in the mechanism in a retaining cup and is operable, through sphere-to-sphere engagement, to pivot therein to perform shifting operations. The retaining cup is housed in a housing through which the lever extends.

Shift lever mechanisms also generally comprise biasing means operable to provide a biasing force on the lever when it is shifted from a predetermined neutral position.

Known biasing means generally comprise a pair of diametrically opposing return pins operable to contact opposite side surfaces of the lever. The return pins are disposed along an axis transverse to that of the lever in a biased neutral position and are operable to apply a biasing force on the lower regions of the side surfaces of the lever. A gap, due to manufacturing tolerances, normally exists between each side surface and the associated return pin.

In use, pivotal displacement of the lever, from a neutral position, causes it to abut the relevant return pin and, on further displacement of the lever, displaces the return pin against the biasing force of a spring, thereby applying a returning force on the lever operable to encourage the lever back into the neutral position.

The above mentioned known mechanisms experience undesirable movement of the lever due to biasing means, in the form of return pins, being disposed only in limited directional positions relative to displacement of the lever. In order to have a completely biased lever it would be necessary to have a return pin disposed in each direction in which the lever is displaceable. This would clearly be uneconomic as each return pin requires a hole machined into the housing in which it is disposed.

Further, the gap between each side surface of the lever and the associated return pin translates into undesirable movement of the lever, which is felt by a user.

Furthermore, the disposition of the return pins, transverse to the longitudinal axis of the housing, and the length of travel required in the pins to provide the desired biasing force, dictates the overall minimum width of the mechanism.

Document US 3064493A, which constitutes the closest prior art, discloses a gear shift lever mounted on pivoting means. The pivoting means comprises a ball consisting of two parts, a cam mechanism and a spring operative to maintain the two parts of the ball in contact with a co-operating socket. The cam mechanism acts by way of the ball to maintain the gear shift lever in one position.

It is desirable for the user to experience a positive feel and positional certainty when the lever is displaced into predetermined positions, including neutral positions.

Further, it is desirable to increase the functional efficiency of shift lever mechanisms and to reduce costs related to manufacturing thereof.

Furthermore, a compact mechanism, the size of which is not dictated by elements thereof extending radially outwards from the longitudinal axis of the housing, is desirable.

It is an object of the present invention to provide a shift lever mechanism operable to provide the user with positive feel and positional certainty of the lever.

It is also an object of the present invention to provide a shift lever mechanism with increased functional efficiency.

Further, it is an object of the present invention to provide a shift lever mechanism having relatively lower manufacturing costs.

Furthermore, it is an object of the present invention to provide a shift lever mechanism which is compact, the size of which is not dictated by elements thereof extending radially outwards from the longitudinal axis of the housing.

A shift lever mechanism in accordance with the present invention is characterised by the features of independent claim 1.

According to the present invention a shift lever mechanism comprises a lever, pivoting means adapted to facilitate pivoting of the lever from a neutral position into a plurality of pivoted gear selection positions, and biasing means, disposed on the lever coaxially therewith and operable to bias the lever into said neutral position,
the biasing means comprising a first element having a bearing face, a second element, disposed co-axially with the lever, having an end face and a biasing face, a third element, disposed on the lever and fixed thereto to extend radially outwards therefrom, and a biasing element, disposed co-axially with the lever, and arranged to extend between the biasing face and the third element, wherein, upon pivoting the lever, from the neutral position in to a gear selection position, the second element end face bears onto the first element bearing face to produce a returning biasing force which, by way of the spring and the third element, is applied to the lever and thereby biases the lever into the neutral position.

The biasing means may be disposed on the lever such that it is coaxial therewith.

The biasing element may be a spring.

The shift lever mechanism may comprise a housing, a lever having a longitudinal axis, pivoting means adapted to facilitate pivoting of the lever into a plurality of positions, and biasing means operable to bias the lever into at least one biased position, characterised in that the biasing means is operable to apply a biasing force in a substantially non-transverse direction relative to the longitudinal axis of the lever.

The shift lever mechanism may comprise a housing, a lever having a longitudinal axis, pivoting means adapted to facilitate pivoting of the lever into a plurality of positions, and biasing means operable to bias the lever into at least one biased position, characterised in that the biasing means is adapted to apply a biasing force operable to oppose any direction in which the lever is displaceable.

The housing may comprise a longitudinal axis and the direction of the applied biasing force may be substantially that of the longitudinal axis of the housing. When in the biased position, the longitudinal axis may lie substantially in the same direction as the biasing force is applicable.

The lever preferably extends through the first, second, third and biasing elements to form a substantially coaxial arrangement therewith. The biasing element may comprise a spring.

The first element is advantageously adapted to engage with stop means, which is preferably disposed on the housing, more preferably on an inner wall of the housing. The stop means may comprise a region of reduced diameter of the inner wall of the housing, which may be in the form of an abutment against which the first element engages.

The stop means may be operable to prevent pivotable displacement of the first member in a at least one direction.

Alternatively, the stop means may be disposed on the lever, or within a transmission system with which it is operatively associated.

The shift lever mechanism may also comprise second biasing means which may be the same as the first biasing means.

The pivoting means may be disposed on the lever intermediate the first and second biasing means.

The pivoting means may comprise a spherical element advantageously disposed in a retaining cup and operable to pivotally move therein by sphere-to-sphere engagement therewith.

The spherical element may be fixed to the lever thereby forming a pivot point on the lever. The spherical element may be fixed to the lever by means of a retaining pin. Alternatively, the spherical element may form an integral part of the lever.

The lever may extend through the spherical element to form an arrangement substantially coaxial therewith.

The spherical element is preferably disposed on the lever intermediate first and second ends thereof.

The spherical element is preferably formed from a plastics material. Alternatively, the spherical element may be formed from a metallic material.

The retaining cup may be formed from a plastics material. Alternatively, the retaining cup may be formed from a metallic material.

The retaining cup may be disposed in the housing and may be formed from more than one part.

The present invention will now be described further, by way of example, with reference to the accompanying drawings, in which:
Figure 1 is a shift lever mechanism according to the present invention, in section through A-A, showing the lever disposed in a biased neutral position;
Figure 2 is the shift lever mechanism of Figure 1, in section through B-B, showing the lever disposed in a neutral position;
Figure 3 is the shift lever mechanism of Figures 1 and 2, in section through B-B, showing the lever disposed intermediate the neutral position and a predetermined position, engaging resilient means;
Figure 4 is the shift lever mechanism of the abovementioned figures, in section through B-B, showing the lever disposed in a predetermined position having overcome the resilient means; and,
Figure 5 is the shift lever mechanism of the abovementioned figures, in section through A-A, showing the lever disposed in a predetermined position.

Referring to the drawings there is shown a shift lever mechanism 10 comprising a housing 12, having a longitudinal axis 14, a lever 16, having a first end 18, a second end 20 and a longitudinal axis 22, pivoting means 24, and biasing means 26

The housing 12 is cylindrical, formed around the longitudinal axis 14, and comprises a wall 28, having an inner surface 30, and a cover 32.

The lever 16 is formed from an elongate member having an external diameter and, in a neutral position, is disposed within the housing 12 along the longitudinal axis 14 thereof.

The pivoting means 24 comprises a spherical element 34, having an outer spherical surface 36, and a retaining cup 38, having an inner spherical surface 40. The retaining cup 38 is operable to retain the spherical element 34 therein and to provide pivotal displacement of the spherical element 34, about a pivot point 42, by engagement of the outer spherical surface 36 thereof with the inner spherical surface 40 of the retaining cup 38.

The retaining cup 38 may be formed from two or more pieces facilitate assembly of the mechanism.

The spherical element 34 and the retaining cup are formed from a plastics material. Alternatively, they may be formed from a metallic material.

The lever 16 extends through the spherical element 34 and is fixed thereto, intermediate the first and second ends 18 and 20 thereof, by retaining pin 44. The lever 16 is therefore pivotable about the pivot point 42.

The biasing means 26 comprises first and second elements, 46 and 48, adapted to be displaceable along the longitudinal axis 22 of the lever 16, a third element 50 fixed relative to the lever 16, and a biasing element in the form of a spring 52 disposed intermediate the second and third elements, 48 and 50, respectively.

The biasing means also comprises stop means 54 in the form of a region of lesser diameter disposed on the inner surface 30 of the housing wall 28 as an abutment 56. The abutment 56 may form part of the retaining cup 38 to reduce manufacturing costs.

The first element 46 is in the form of an annular disk having an external diameter sufficiently small to be displaceable within the housing 12 in the direction of the longitudinal axis 14 thereof, and sufficiently large as to abut the abutment 56 disposed on the inner surface 30 of the housing wall 28. The first element 46 also comprises a bearing face 47 and an axially opposing abutment face 49. The first element 46 also comprises an aperture 58 extending axially therethrough.

The second element 48 is in the form of a bush, of top hat shape, having a region of lesser external diameter 60 extending to a top end 62 and a region of greater external diameter 64 defining a rimmed end 66. The rimmed end 66 comprises a rimmed end face 67 and a biasing face 69. The second element 48 also comprises an aperture 68 extending axially therethrough.

The third element 50 is in the form of annular disk having an aperture 70 extending axially therethrough.

In an assembled state, the lever 16 extends through the aperture 58 of the first element 46. The diameter of the aperture 58 is sufficiently greater than the external diameter of the lever 16 such that the lever 16 may be disposed in a position other than transverse thereto.

The lever 16 further extends through the aperture 68 of the second element 48. The diameter of the aperture 68 is greater than the external diameter of the lever 16, such that the second element 48 is slidable along the longitudinal axis 22 of the lever 16, over the outer surface thereof.

The rimmed end 66 of the second element 48 is disposed such that the rimmed end face 67 abuts the bearing face 47 of the first element 46.

The lever 16 further extends through an aperture 70 disposed in the third element 50. The lever 16 comprises a channel 71, defined by a region of lesser diameter disposed around the outer circumference thereof. The aperture 70 is of a diameter which is less than the diameter of the outer surface of the lever 16 such that the third element 50 extends into the channel 71, thereby longitudinally fixing the third element 50 relative to the lever 16.

The spring 52 is disposed to surround the region of lesser diameter 60 of the second element 48 and extend from abutment with the biasing face 69 of the rimmed end 66 to abutment with the third element 50.

The abovementioned pivoting and biasing assembly is retained within the housing by retaining pins 74 and 76 disposed on the lever 16 in the region of the first and second ends 18 and 20 respectively thereof. The lever 16 extends further for user interface beyond the first end 18 and engagement with a transmission system beyond the second end 20.

As shown in the drawings, biasing of the lever 16 may be optimised by second biasing means 72 disposed on the lever to oppose the abovementioned first biasing means 26, that is, such that the pivoting means 24 is disposed on the lever 16 intermediate the first and second biasing means, 26 and 72 respectively, thereby improving the reaction and balance of the lever 16 in response to the biasing forces.

The second biasing means 72 comprises the same components, and the same assembly thereof, as the first biasing means 26.

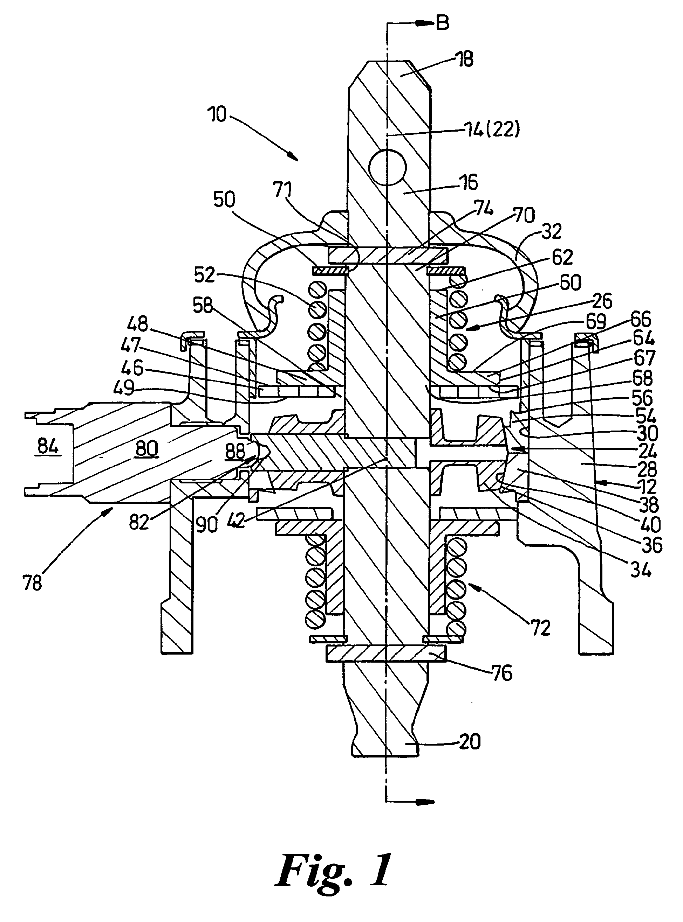

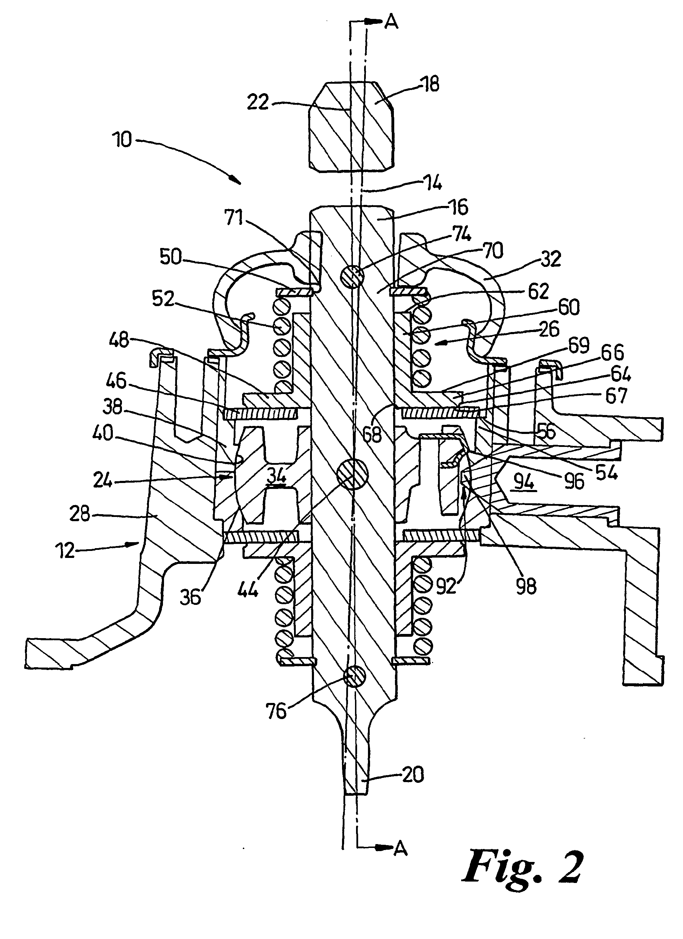

Figures 1 and 2 show the lever, in use, in a neutral position, wherein each first element 46 is substantially perpendicular to the longitudinal axis 22 of the lever 16 and each spring 52 is, therefore, extended to support and balance the lever 16 in that neutral position.

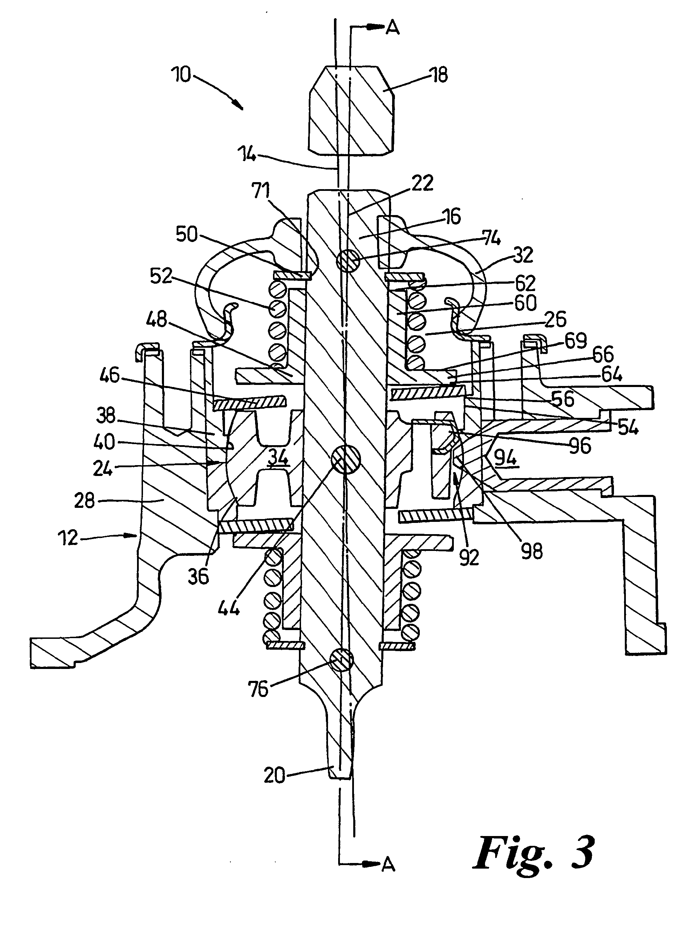

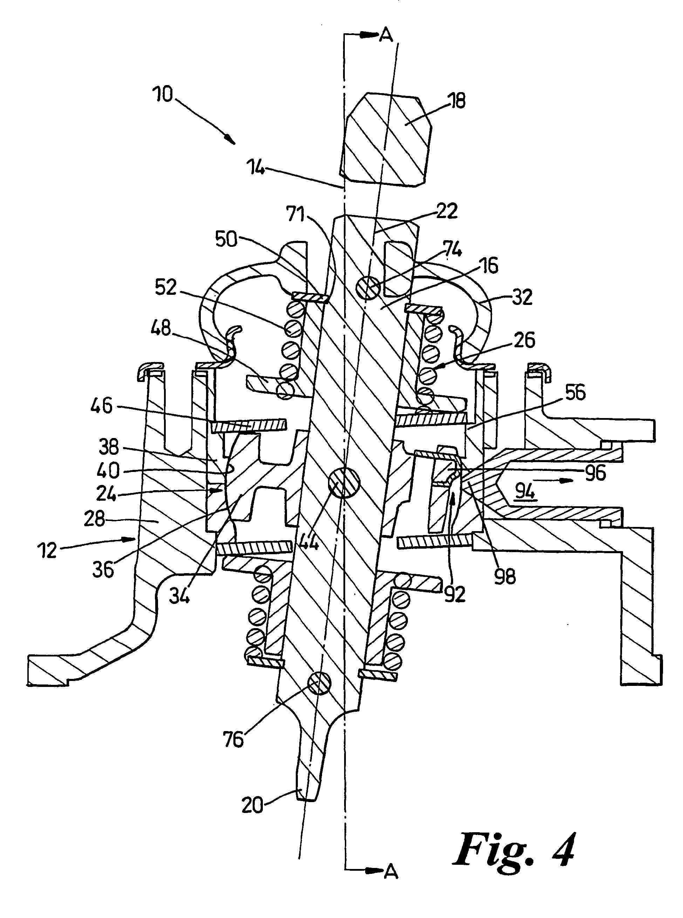

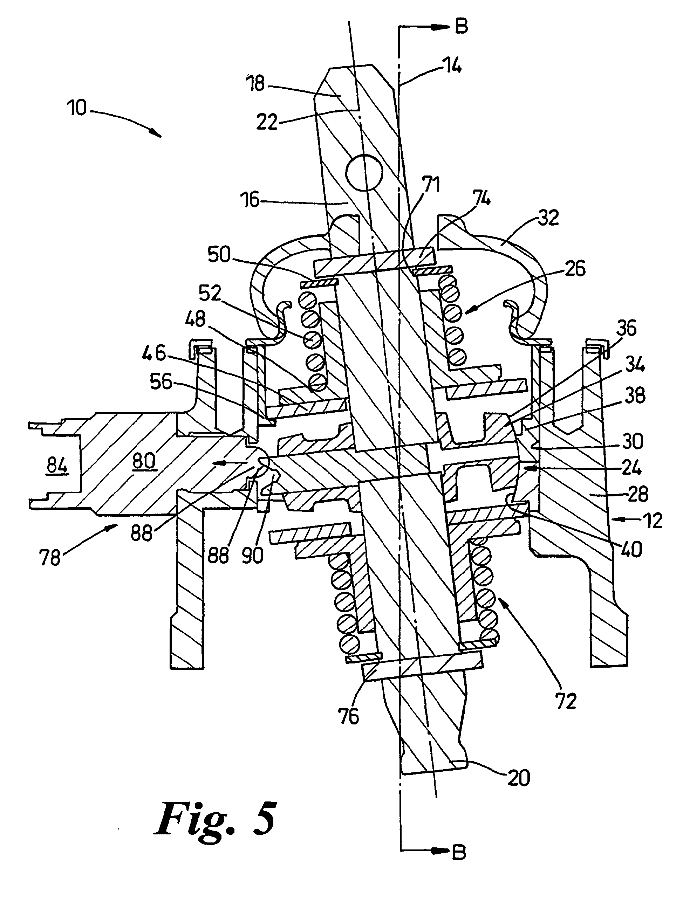

Figures 3 and 4 show the lever 16, in use, in transition towards and disposed in a predetermined gear selection position, pivoted along a first plane, defined by section line B-B, and Figure 5 shows the lever 16, in use, disposed in a predetermined gear selection position pivoted along a second plane, defined by section line A-A, that is, substantially transverse to that of the first plane.

Referring to Figures 3 and 4, the first element 46 is axially fixed relative to the longitudinal axis 14 of the housing 12, to form a bearing platform operable to engage with the second element 48.

In use, the third element 50 is axially fixed relative to the lever 16 and, on pivotal displacement of the lever, applies a force on a region of the spring 52 adjacent the direction in which the lever is pivoted. The applied force compresses the spring between the third element 50 and the biasing face 69 of the second element 48. The second element 48 is slidable along the lever 16 to allow the lever to pivot. However, the greater the pivotal displacement, the greater the force urging it towards the first element 46, which it is prevented from travelling beyond by engagement therewith.

Therefore, the rimmed end face 67, of the second element, bears onto the bearing face 47, of the first element, to produce a returning biasing force which, through the spring 52 and the third element 50, is applied to the lever 16 and thereby biases the lever into the neutral position. The returning biasing force is enhanced by the ability of the second element to slide along the longitudinal axis of the lever.

Simultaneously, as the third element 50 applies a force which compresses the spring 52 adjacent the direction in which the lever is pivoted, it also applies a cooperative extending force to the spring 52 diametrically opposite the compressing force, which is also operable to bias the lever into the neutral position.

Also simultaneously, the second biasing means is operable in the same manner, as the first biasing means described above, to optimise the reaction and balance the biasing effect on the lever.

Referring to Figures 1 and 5, the shift lever mechanism 10 also comprises lever position indication means 78 operable to indicate disposal of the lever 16 in the neutral position.

The lever position indication means 78 comprises a switch 80 operable to engage with switch actuation means 82 to form an electrical signal when the lever 16 is disposed in the neutral position.

The switch 80 comprises a connection end 84 and a contact end 86 and is disposed in the wall 28 of the housing 12 along an axis extending radially outwards from the spherical element 34. The switch 80 is displaceable along the axis in which it is disposed and is biased towards the spherical element 34 such that the contact end 86 is in contact therewith. The connection end 84 is connected to a user interface such as, for example, a visual or audio indicator.

The switch actuation means 82 comprises a member 88 disposed on the contact end 86 of the switch 80 and a member receiver 90 disposed on the spherical element 34. The member 88 is suitably shaped to ride over the surface of the spherical element 34 as the lever 16 is displaced into predetermined positions, as shown in Figure 5. The member receiver 90 is suitably disposed such that on disposal of the lever 16 in the neutral position the member receiver 90 aligns with the member 88 and receives it therein, as shown in Figure 1, thereby forming an electrical connection within the switch 80. The electrical connection forms an electrical signal, which actuates the user interface thereby indicating that the lever 16 is in the neutral position. It is possible to orientate and locate the switch mechanism to operate when the lever is put into a reverse gear position to provide a reverse light switch or other reverse gear warning means.

Referring to Figures 2 to 4, the shift lever mechanism 10 also comprises resilient means 92 operable to provide resistance to displacement of the lever 16 into a restricted position such as, for example, a position which shifts the transmission into a reverse gear.

Figures 2 to 4 show progressive displacement of the lever 16 into the restricted position.

The resilient means comprises a resilient member 94 and a detent 96.

The resilient member 94 is disposed in the wall 28 of the housing 12 along an axis extending radially outwards from the spherical element 34. The resilient member 94 is displaceable along the axis in which it is disposed and is biased towards the spherical element 34 such that it is in contact therewith. The resilient member 94 has a contact end 98 suitably shaped to ride over the surface of the spherical element 34 when the lever 16 is disposed in other positions and to engage with the detent 96 during displacement of the lever 16 into the restricted position.

The detent 96 is suitably disposed on the spherical element 34 to engage with the resilient member 94 only when an attempt is being made to displace the lever 16 into the restricted position.

In use, on an attempt to displace the lever 16 into the restricted position, the resilient member 94 engages the detent 96, which provides resistance to further displacement of the lever 16 in the direction of the restricted position. Increasing the force applied to the lever 16 in the direction of the restricted position, sufficient to overcome the bias applied to the resilient member 94, allows the resilient member 94 to ride over the detent 96, thereby allowing the lever 16 to be disposed in the restricted position.

It will be seen from the description that the present arrangement enables a very compact shift lever assembly to be produced. It can have a reduced height above the transmission when compared to known devices and be smaller because the need for a large spherical pivot element is avoided and the compact biasing means is located on the lever.

Whilst the assembly can work with one biasing means 26, it is preferred to have one above the pivot axis defined by the spherical element 34 and one below it 72. This provides a more balanced feel to the shift operation and facilitated easier design and construction of the assembly.

Throughout the description and claims of this specification the words "comprise" and variations of the word, such as, for example "comprising" and "comprises", mean "including but not limited to", and are not intended to exclude other components or integers.

## Claims

1. A shift lever mechanism (10) comprising, a lever (16), pivoting means (24) adapted to facilitate pivoting of the lever (16) from a neutral position into a plurality of pivoted gear selection positions, and biasing means (26), disposed on the lever (16) coaxially therewith and operable to bias the lever into said neutral position,
**characterised in that** the biasing means (26) comprises a first element (46) having a bearing face (47), a second element (48), disposed co-axially with the lever (16), having an end face (67) and a biasing face (69), a third element (50), disposed on the lever (16) and fixed thereto to extend radially outwards therefrom, and a biasing element (52), disposed co-axially with the lever, and arranged to extend between the biasing face (69) and the third element (50), wherein, upon pivoting the lever(16), from the neutral position in to a gear selection position, the second element end face(69) bears onto the first element bearing face (47) to produce a returning biasing force which, by way of the biasing element (52) and the third element (50), is applied to the lever (16) and thereby biases the lever into the neutral position.

2. A shift lever mechanism, as claimed in Claim 1, wherein the second element is displaceable along part of the lever (16) in the direction of the longitudinal axis thereof.

3. A shift lever mechanism, as claimed in Claim 1 or 2, wherein the biasing means is operable to provide omni-directional biasing of the lever (16).

4. A shift lever mechanism, as claimed in any of the preceding claims, comprising a housing (12) having an abutment (56) on which the first element is disposed.

5. A shift lever mechanism, as claimed in any of the preceding claims, wherein the biasing element (52) is a spring.

6. A shift lever mechanism, as claimed in any of the preceding claims, comprising second biasing means (72).

7. A shift lever mechanism as claimed in Claim 6, wherein the pivoting means is disposed intermediate the first and second biasing means (26, 72).

8. A shift lever mechanism as claimed in Claim 6 or 7, wherein the second biasing means (72) is substantially the same as the first biasing means (26) and is arranged on the lever (16) to be reciprocally operable with the first biasing means (26).

## Patentansprüche

1. Schalthebelmechanismus (10) mit einem Hebel (16), einer Schwenkeinrichtung (24), die dazu eingerichtet ist, eine Verschwenkung des Hebels (16) von einer neutralen Stellung aus in mehrere verschwenkte Gangauswahlstellungen zu unterstützen, und einer Vorspanneinrichtung (26), die an dem Hebel (16) koaxial zu diesem angeordnet und betriebsmäßig dazu eingerichtet ist, den Hebel in die neutrale Stellung vorzuspannen,
**dadurch gekennzeichnet, dass** die Vorspanneinrichtung (26) ein erstes Element (26) mit einer Auflagefläche (47), ein koaxial zu dem Hebel (16) angeordnetes zweites Element (48), das eine Endfläche (67) und eine Vorspannfläche (69) aufweist, ein drittes Element (50), das an dem Hebel (16) angeordnet und mit diesem fest verbunden ist, um sich von diesem aus radial nach außen zu erstrecken, und ein Vorspannelement (52) aufweist, das koaxial zu dem Hebel angeordnet und dazu eingerichtet ist, sich zwischen der Vorspannfläche (69) und dem dritten Element (50) zu erstrecken, wobei bei einer Verschwenkung des Hebels (16) von der neutralen Stellung in eine Gangauswahlstellung sich die Endfläche (67) des zweiten Elementes auf der Auflagefläche (47) des ersten Elementes abstützt, um eine rückstellende Vorspannkraft zu erzeugen, die über das Vorspannelement (52) und das dritte Element (50) auf den Hebel (16) angewandt wird und **dadurch** den Hebel in die neutrale Stellung vorspannt.

2. Schalthebelmechanismus nach Anspruch 1, wobei das zweite Element entlang eines Teils des Hebels (16) in der Richtung seiner Längsachse verschiebbar ist.

3. Schalthebelmechanismus nach Anspruch 1 oder 2, wobei die Vorspanneinrichtung funktionsmäßig zur Schaffung einer omnidirektionalen Vorspannung des Hebels (16) eingerichtet ist.

4. Schalthebelmechanismus nach einem beliebigen der vorhergehenden Ansprüche, der ein Gehäuse (12) mit einem Widerlager (56) aufweist, an den das erste Element angelegt ist.

5. Schalthebelmechanismus nach einem beliebigen der vorhergehenden Ansprüche, wobei das Vorspannelement (52) durch eine Feder gebildet ist.

6. Schalthebelmechanismus nach einem beliebigen der vorhergehenden Ansprüche, der eine zweite Vorspanneinrichtung (72) aufweist.

7. Schalthebelmechanismus nach Anspruch 6, wobei die Schwenkeinrichtung zwischen der ersten und der zweiten Vorspanneinrichtung (26, 72) angeordnet ist.

8. Schalthebelmechanismus nach Anspruch 6 oder 7, wobei die zweite Vorspanneinrichtung (72) im Wesentlichen die gleiche ist wie die erste Vorspanneinrichtung (26) und an dem Hebel (16) angeordnet ist, um in Wechselwirkung mit der ersten Vorspanneinrichtung (26) funktionieren zu können.

## Revendications

1. Mécanisme de levier de vitesse (10) comprenant un levier (16), des moyens de pivotement (24) adaptés pour faciliter le pivotement du levier (16) d'une position neutre vers une pluralité de positions de sélection de vitesse pivotées, et des moyens de sollicitation (26), disposés sur le levier (16) de manière coaxiale à celui-ci et pouvant être actionnés pour solliciter le levier vers ladite position neutre,
**caractérisé en ce que** les moyens de sollicitation (26) comprennent un premier élément (46) présentant une face d'appui (47), un deuxième élément (48), disposé de manière coaxiale au levier (16), présentant une face d'extrémité (67) et une face de sollicitation (69), un troisième élément (50), disposé sur le levier (16) et fixé à celui-ci pour s'étendre radialement à l'extérieur de celui-ci, et un élément de sollicitation (52), disposé de manière coaxiale au levier, et agencé pour s'étendre entre la face de sollicitation (69) et le troisième élément (50), dans lequel, lors du pivotement du levier (16) de la position neutre à une position de sélection de vitesse, la face d'extrémité du second élément (69) est en appui sur la face d'extrémité du premier élément (47) pour produire une force de sollicitation de rappel qui, par l'intermédiaire de l'élément de sollicitation (52) et du troisième élément (50), est appliquée au levier (16) et sollicite de ce fait le levier vers la position neutre.

2. Mécanisme de levier de vitesse selon la revendication 1, dans lequel le second élément peut être déplacé le long de la partie du levier (16) dans la direction de l'axe longitudinal de celui-ci.

3. Mécanisme de levier de vitesse selon la revendication 1 ou 2, dans lequel les moyens de sollicitation peuvent être actionnés pour fournir une sollicitation omnidirectionnelle du levier (16).

4. Mécanisme de levier de vitesse selon l'une quelconque des revendications précédentes, comprenant un boîtier (12) présentant une butée (56) sur laquelle est disposé le premier élément.

5. Mécanisme de levier de vitesse selon l'une quelconque des revendications précédentes, dans lequel l'élément de sollicitation (52) est un ressort.

6. Mécanisme de levier de vitesse selon l'une quelconque des revendications précédentes, comprenant des seconds moyens de sollicitation (72).

7. Mécanisme de levier de vitesse selon la revendication 6, dans lequel les moyens de pivotement sont disposés entre les premiers et les seconds moyens de sollicitation (26, 72).

8. Mécanisme de levier de vitesse selon la revendication 6 ou 7, dans lequel les seconds moyens de sollicitation (72) sont sensiblement les mêmes que les premiers moyens de sollicitation (26) et sont agencés sur le levier (16) pour pouvoir être actionnés réciproquement avec les premiers moyens de sollicitation (26).
